# EUROPÄISCHE PATENTANMELDUNG

(11) **EP 0 548 042 A1**
(43) Veröffentlichungstag der Anmeldung: **23.06.1993**
(21) Anmeldenummer: 92890257.6
(22) Anmeldetag: 07.12.1992
(51) Int. Cl.: C21C 5/52

(54) **Verfahren zum Herstellen von Metallschmelzen, insbesondere Stahlschmelzen**

(30) Priorität: 16.12.1991 AT 2491/91
(71) Anmelder: VOEST-ALPINE Industrieanlagenbau GmbH, A-4020 Linz (AT)
(72) Erfinder: Steins, Johannes, Dipl.-Ing., A-4210 Gallneukirchen (AU); Berger, Harald, Dipl.-Ing, Dr., A-4020 Linz (AU); Mittag, Peter, Dipl.-Ing., A-4020 Linz (AU)
(74) Vertreter: Wolfram, Gustav, Dipl.-Ing.

(57) **Zusammenfassung**

Bei einem Verfahren zum Herstellen von Metallschmelzen, insbesondere einer Stahlschmelze aus Schrott (22), in einem Elektro-Lichtbogenofen mit mindestens einer Graphitelektrode werden zur Verringerung des Elektrodenverbrauches organische Substanzen (24, 26) in den Lichtbogen (20) durch eine zentrale Längsausnehmung (14) der Graphitelektrode (4) eingebracht (Fig. 1).

## Beschreibung

Die Erfindung betrifft ein Verfahren zum Herstellen von Metallschmelzen, insbesondere einer Stahlschmelze aus Schrott, in einem Elektro-Lichtbogenofen mit mindestens einer Graphitelektrode, sowie einen Elektro-Lichtbogenofen zur Durchführung des Verfahrens.

Elektroöfen mit Graphitelektroden, die die elektrische Energie durch Lichtbogenbildung einbringen (wie z.B. bekannt aus der DE-A - 32 41 987 und der DE-C - 29 44 269), zeigen einen relativ hohen Spitzenabbrand, vor allem im anodischen Betrieb, der vom Quadrat des Stromes abhängt und thermisch durch den Elektronenaustausch verursacht wird. Dieser Elektrodenspitzenabbrand mußte bisher als gegeben hingenommen werden und stellt einen bedeutenden, bisher als unabwendbar angesehenen Kostenfaktor dar.

Die Erfindung bezweckt die Vermeidung dieser Nachteile und Schwierigkeiten und stellt sich die Aufgabe, ein Verfahren sowie einen Elektro-Lichtbogenofen zur Durchführung des Verfahrens zu schaffen, welche eine bedeutende Verringerung des Elektrodenverbrauches ermöglichen. Insbesondere soll es auch bei einer als Anode geschalteten Graphitelektrode möglich sein, den Abbrand starkzu reduzieren, so daß der Verbrauch der anodisch geschalteten Graphitelektrode nicht gravierend höher ist als der Verbrauch einer kathodisch geschalteten Graphitelektrode. Hierbei sollen sich jedoch keine Nachteile für den Schmelzvorgang ergeben, d.h. der Wirkungsgrad und die Schmelzleistung sollen mindestens gleich sein denen herkömmlicher Elektro-Lichtbogenöfen.

Diese Aufgabe wird erfindungsgemäß dadurch gelöst, daß organische Substanzen in den Lichtbogen durch eine zentrale Längsausnehmung der Graphitelektrode eingebracht werden.

Das Einbringen der organischen Substanzen in den heißesten Bereich des Elektro-Lichtbogenofens bewirkt ein Zerlegen dieser Substanzen, d.h. eine energieverbrauchende Spaltungsreaktion. Hierdurch wird eine Kühlwirkung bewirkt, die die Temperatur an der Elektrodenspitze so weit herabsenkt, daß der Graphitverbrauch beträchtlich gesenkt wird.

Hohlelektroden sind beispielsweise aus der DE-A- 29 00 864 und der DE-A- 30 22 566 bekannt. Diese bekannten Hohlelektroden dienen gemäß der DE-A-29 00 864 dazu, Kalk, Kohlenstoff, Aluminiumoxid oder sonstige Legierungszusätze mittels eines Trägergases, wie Edelgas, Stickstoff, Sauerstoff oder Luft einzubringen, bzw. gemäß der DE-A - 30 22 566 zur Einleitung von Zusatzstoffen, wie Schlick, Koks oder Kalk.

Vorzugsweise werden erfindungsgemäß als organische Substanzen Kohlenwasserstoffe in fester, flüssiger und/oder gasförmiger Form in den Lichtbogen eingebracht, dort unter Kühlung der Elektrodenspitze zerlegt und die Zerlegungsprodukte in weiterer Folge verbrannt.

Durch die Kühlwirkung des Crack-Prozesses tritt eine besonders effiziente Kühlung der heißen Elektrodenspitze auf. Dabei bietet sich erfindungsgemäß die Möglichkeit, mit der Kühlung der Elektrodenspitze eine umweltschonende Entsorgung von festen oder flüssigen Kohlenwasserstoffen, wie z.B. von Kunststoffen oder Altölen, bei gleichzeitiger energetischer Nutzung zu verbinden.

Die hohe Temperatur des Lichtbogens, an dem unmittelbar der Crack-Prozeß stattfindet, sorgt dafür, daß die Bildung von umweltgefährdenden organischen Verbindungen, wie Dioxinen und Furanen vermieden wird bzw. eine Unterschreitung der diesbezüglichen behördlichen Emissionswerte sichergestellt ist.

Ein Elektro-Lichtbogenofen zur Durchführung des erfindungsgemäßen Verfahrens ist gekennzeichnet durch mindestens eine eine zentrale Längsausnehmung aufweisende Graphitelektrode, deren aus dem Elektro-Lichtbogenofen ragendes Ende an eine organische Substanzen fördernde Leitung angeschlossen ist, wobei zweckmäßig in der Leitung eine Mischstation zum Zumischen von festen und/oder flüssigen Kohlenwasserstoffen vorgesehen ist.

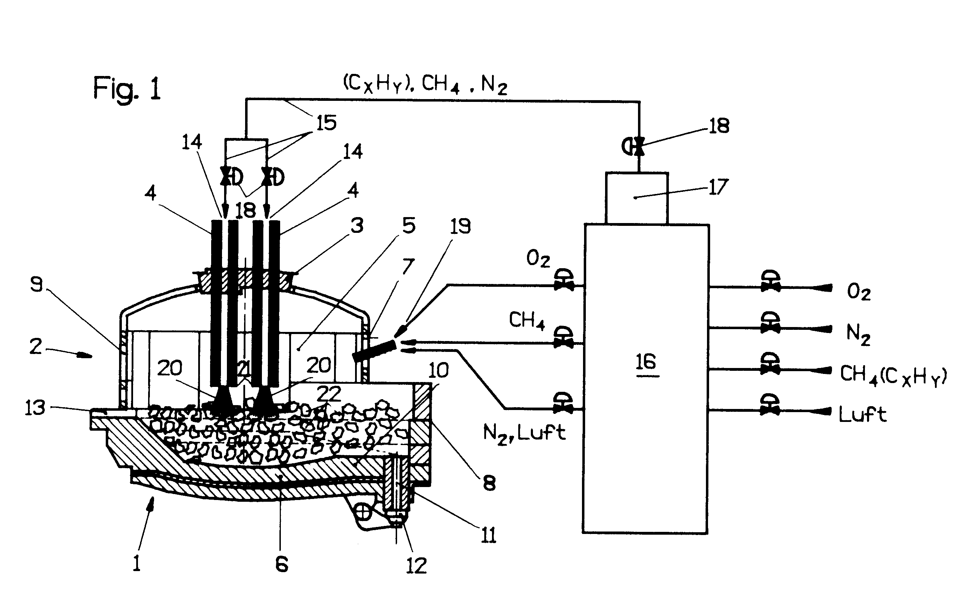

Die Erfindung ist nachfolgend anhand einiger in der Zeichnung dargestellter Ausführungsbeispiele näher erläutert, wobei die Fig. 1 bis 3 jeweils einen Elektro-Lichtbogenofen im Querschnitt in schematischer Darstellung veranschaulichen.

Der in sämtlichen Figuren etwa gleich gestaltete kippbare Elektroofen, der grundsätzlich für einen Gleichstrom- oder einen Wechselstrombetrieb geeignet ist, weist einen wannenförmigen Unterteil 1 mit angenähert kreisförmigem Grundriß und einen auf dem Unterteil 1 aufgesetzten Oberteil 2 auf, durch dessen schematisch angedeuteten Deckel 3 Graphitelektroden 4, vorzugsweise drei an einem Teilkreis angeordnete Graphitelektroden 4, in den Ofeninnenraum 5 geführt sind. Der wannenförmige Unterteil 1 ist mit einer feuerfesten Ausmauerung 6 versehen und weist einen Oberteil 2 auf, der von kühlmitteldurchflossenen Wandelementen 9 gebildet ist. An einer Seite 7 ist ein erkerartiger Vorsprung 8 am Unterteil 1 angebracht. Im Boden 10 des Vorsprunges 8 ist ein Abstichloch 11 vorgesehen, welches mittels einer nicht näher dargestellten Verschlußeinrichtung 12 geschlossen bzw. geöffnet werden kann. Zum Zweck des Schlackenabstiches ist dem Vorsprung 8 radial gegenüberliegend eine Schlackenabflußrinne 13 am Unterteil vorgesehen, die mittels einer nicht dargestellten Türe verschließbar ist.

Die Graphitelektroden 4 sind als Hohlelektroden mit einer zentralen Ausnehmung 14 ausgebildet. Sämtliche Graphitelektroden 4 sind an Förderleitungen 15 angeschlossen, die zusammengefaßt in eine Ventilstation 16 münden. In diese Ventilstation kann Luft, CH₄ bzw. CₓHy, N₂ und 0₂ zugeführt werden. Über eine Mischstation 17 und Regelventile 18 wird den zu den Elektroden 4 führenden Förderleitungen 15 wahlweise CH₄, CXH₄ bzw. N₂ zugeführt, wobei die Mengenverhältnisse der zugeführten Gase je nach Betriebszustand des Elektro-Lichtbogenofens eingestellt werden.

In den Oberteil 2 des Elektroofens sind weiters eine oder mehrere Gas-Sauerstoff-Brennerlanzen 19 eingesetzt, die von der Ventilstation mit 0₂, CH₄, N₂ und Luft versorgt werden, wobei die Zusammensetzung dieser Gase nach den gewünschten Betriebsverhältnissen einstellbar ist.

Gemäß der Ausführungsform nach Fig. 1 werden durch die Hohlelektroden 4 in erster Linie gasförmige Kohlenwasserstoffe dem Lichtbogen 20 zugeführt. Die sich dabei einstellenden Verhältnisse an der Elektrode sind nachfolgend beschrieben:
Die durch die Ausnehmung 14 einer Hohlelektrode 4 an die sehr heiße Elektrodenspitze 21 geleiteten Kohlenwasserstoffe werden an der Elektrodenspitze in endothermer Spaltungsreaktion in ihre Bestandteile mit entsprechender Kühlwirkung zerlegt. Beispielsweise wird beim Cracken von Methan (CH₄) in seine Bestandteile Kohlenstoff und Wasserstoff 2,5 Mcal/Nm³ CH₄ verbraucht. Diese Kühlwirkung setzt die Temperatur an der Elektrodenspitze 21 so weit herab, daß der Graphitverbrauch beträchtlich gesenkt wird.

Die Kühlwirkung setzt sich zusammen aus der verbrauchten Spaltungsenergie der Kohlenwasserstoffe und der verbrauchten Energie, die notwendig ist, die Spaltungsprodukte Kohlenstoff und Wasserstoff im Lichtbogen von etwa Raumtemperatur auf über 1500°C zu erhitzen.

Die Einsparung an Elektrodengraphit durch die Spaltungskühlung hat einen Mehrverbrauch an Energie zur Folge, der jedoch durch den Energiegewinn aus der Verbrennung der Spaltungsprodukte Kohlenstoff: C + 0₂ --> C0₂ - Q_{c} (Q_{c} = 7,9 Mcal/kg C) und Wasserstoff: 2H₂ + 0₂ --> 2H₂0 - Q_{H} (Q_{H} = 2,7 Mcal/Nm³ H₂) kompensiert wird.

Die energieverbrauchenden, kühlenden Reaktionen treten an der Elektrodenspitze 21 auf, die wärmeenergieliefernden Reaktionen treten im entsprechenden Reaktionsraum auf und werden genutzt, um den Einschmelzprozeß des Chargiergutes, beispielsweise Schrott 22, zu unterstützen.

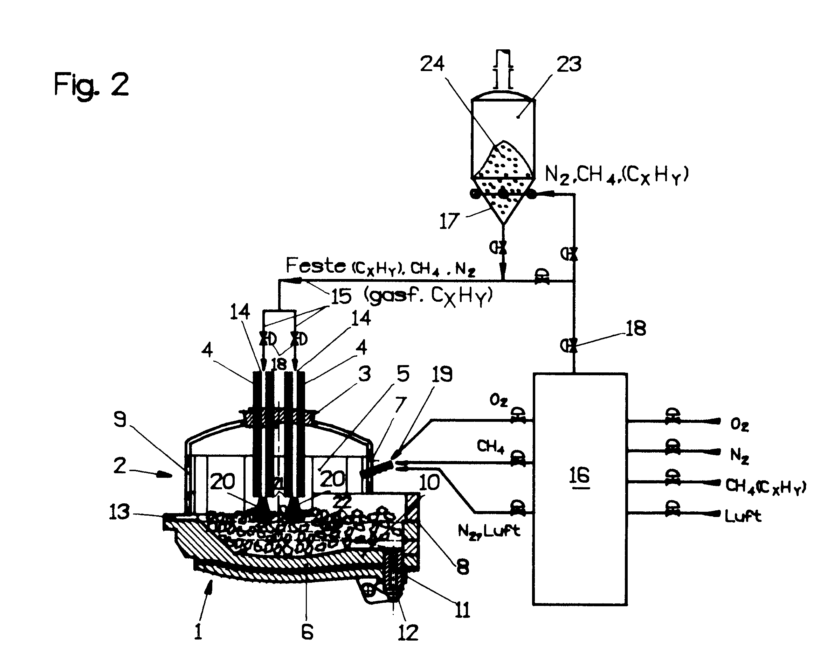

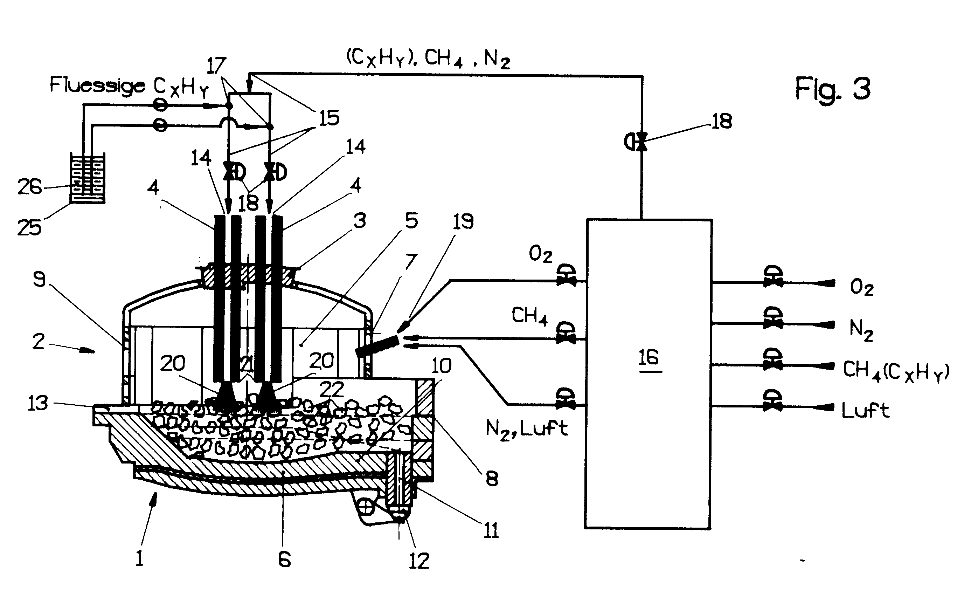

In den Fig. 2 und 3 ist das Einblasen von festen, in einem Vorratsbehälter 23 befindlichen Kohlenwasserstoffen 24 (in Form von Kunststoffabfällen) durch die Hohlelektroden 4 in den Lichtbogen 20 bzw. das Einblasen von flüssigen, in einem Speicherbehälter 25 gesammelten Kohlenwasserstoffen 26 (z.B. Altölen) veranschaulicht. In beiden Fällen dient ein durch die Hohlelektroden unter Druck eingeleitetes Gas, z.B. CH₄, CₓHy, N₂, als Fördermittel.

Der oben beschriebene Kühleffekt an der Elektrodenspitze tritt bei der Entsorgung der festen Kohlenwasserstoffe (z.B. Kunststoffe) und der flüssigen Kohlenwasserstoffe (z.B. Altöle) ebenfalls auf, und es sind die Spaltprodukte zur Energiegewinnung und - übertragung auf das Schmelzgut vorteilhaft zu nutzen.

Die Vorteile des erfindungsgemäßen Verfahrens gegenüber herkömmlichen Schmelzverfahren lassen sich wie folgt zusammenfassen:
- Geringerer Elektrodenverbrauch durch die Kühlwirkung an der Elektrodenspitze
- Beim Gleichstromofen ist ein Verzicht auf eine Bodenanode möglich, da eine Graphitelektrode als Anode geschaltet werden kann, ohne daß der Nachteil des 3-mal höheren Spitzenverbrauches der anodisch geschalteten Elektrode gegenüber der kathodisch geschalteten auftritt.
- Energiegewinn beim Schrotteinschmelzen durch Verbrennen der Spaltprodukte C zu C0₂ und H₂ zu H₂0.
- Möglichkeit der umweltgerechten (d.h. schadstofffreien) Entsorgung von organischen Stoffen im elektrischen Lichtbogen, bei gleichzeitiger energetischer Nutzung.

## Patentansprüche

1. Verfahren zum Herstellen von Metallschmelzen, insbesondere einer Stahlschmelze aus Schrott (22), in einem Elektro-Lichtbogenofen mit mindestens einer Graphitelektrode (4), dadurch gekennzeichnet, daß organische Substanzen (24, 26) in den Lichtbogen (20) durch eine zentrale Längsausnehmung (14) der Graphitelektrode (4) eingebracht werden.

2. Verfahren nach Anspruch 1, dadurch gekennzeichnet, daß als organische Substanzen Kohlenwasserstoffe (24, 26) in fester, flüssiger und/ oder gasförmiger Form in den Lichtbogen (20) eingebracht, dort unter Kühlung der Elektrodenspitze (21) zerlegt und die Zerlegungsprodukte in weiterer Folge verbrannt werden.

3. Verfahren nach Anspruch 2, dadurch gekennzeichnet, daß als Kohlenwasserstoffe in fester Form Kunststoffabfälle (24) eingebracht werden.

4. Verfahren nach Anspruch 3, dadurch gekennzeichnet, daß die Kunststoffabfälle (24) zusammen mit einem Trägergas pneumatisch in den Lichtbogen gefördert werden.

5. Verfahren nach Anspruch 3, dadurch gekennzeichnet, daß als flüssige Kohlenwasserstoffe Altöle (26) eingebracht werden.

6. Elektro-Lichtbogenofen zur Durchführung des Verfahrens nach einem oder mehreren der Ansprüche 1 bis 5, gekennzeichnet durch mindestens eine eine zentrale Längsausnehmung (14) aufweisende Graphitelektrode (4), deren aus dem Elektro-Lichtbogenofen ragendes Ende an eine organische Substanzen fördernde Leitung (15) angeschlossen ist.

7. Elektro-Lichtbogenofen nach Anspruch 6, dadurch gekennzeichnet, daß in der Leitung eine Mischstation (17) zum Zumischen von festen und/oder flüssigen Kohlenwasserstoffen vorgesehen ist.
